# EUROPÄISCHE PATENTANMELDUNG

(11) **EP 3 641 216 A1**
(43) Veröffentlichungstag der Anmeldung: **22.04.2020**
(21) Anmeldenummer: 18201585.9
(22) Anmeldetag: 19.10.2018
(51) Int. Cl.: H04L 9/32, H04L 29/06

(54) **VERFAHREN ZUM SICHEREN BETREIBEN EINES INDUSTRIELLEN AUTOMATISIERUNGSGERÄTS IN EINEM AUTOMATISIERUNGSSYSTEM UND EIN AUTOMATISIERUNGSGERÄT, EIN INBETRIEBNAHMEGERÄT SOWIE EINE REGISTRIERUNGSSTELLE**

(71) Anmelder: Siemens Aktiengesellschaft, 80333 München (DE)
(72) Erfinder: Brockhaus, Hendrik, 85579 Unterbiberg (DE); Bußer, Jens-Uwe, 85579 Neubiberg (DE)

(57) **Zusammenfassung**

Die Erfindung betrifft ein Verfahren zum sicheren Betreiben eines industriellen Automatisierungsgeräts (D1, D2) in einem Automatisierungssystem (100). Dazu wird ein operatives Zertifikat (OCERT) für das Automatisierungsgerät (D1, D2) basierend auf zumindest einer dem Automatisierungsgerät (D1, D2) zugeordneten ersten Kennung (DEVID) und zumindest einer einem Einbauort (10) zugeordneten zweiten Kennung (OPID) bereitgestellt (S4). Die Erfindung betrifft weiterhin ein Automatisierungsgerät (D1, D2), ein Inbetriebnahmegerät (PG) sowie eine Registrierungsstelle (LRA).

## Beschreibung

Die Erfindung betrifft ein Verfahren zum sicheren Betreiben eines industriellen Automatisierungsgeräts in einem Automatisierungssystem. Die Erfindung betrifft weiterhin ein Automatisierungsgerät, ein Inbetriebnahmegerät sowie eine Registrierungsstelle.

Mit steigenden Sicherheitsanforderungen an industrielle Automatisierungsgeräte und -systeme, wird eine einfache sichere Inbetriebnahme für einen sicheren Betrieb zunehmend wichtiger. Sicherheit ist nicht im Sinne von "Safety", sondern im Sinne von "Security" bzw. "Cybersecurity" zu verstehen.

Insbesondere die initiale Verteilung von operativen digitalen Zertifikaten ist für eine Bereitstellung einer vertrauenswürdigen und sicheren Kommunikation im industriellen Umfeld wichtig. Operativ ist das Zertifikat, das dem Automatisierungsgerät für den Betrieb in der Automatisierungsumgebung am Einsatzort des Automatisierungsgeräts zur Verfügung gestellt wird. Mit einem operativen Schlüssel-Zertifikat bestätigt eine vertrauenswürdige Instanz, dass ein öffentlicher kryptographischer Schlüssel zu einer bestimmten Identität in der Automatisierungsanlage gehört. Dies ermöglicht allen Kommunikationspartnern einer Komponente, beispielsweise die Authentizität ihrer digitalen Signaturen festzustellen.

Das Erstellen, Verwalten und Warten derartiger operativer Zertifikate für hunderte Automatisierungsgeräte in einer einzigen Automatisierungsanlage gestaltet sich sehr aufwendig. Auch das Bereitstellen einer vertrauenswürdigen Installationskette ist wichtig.

Es ist Aufgabe der vorliegenden Erfindung ein Verfahren zur Verfügung zu stellen, dass es vereinfacht, ein operatives Zertifikat zum sicheren Betreiben eines industriellen Automatisierungsgeräts zur Verfügung zu stellen. Es ist weiter Aufgabe der Erfindung ein Inbetriebnahmegerät zur Durchführung des Verfahrens und/oder zur Teilnahme am Verfahren anzugeben. Ferner ist es Aufgabe eine Registrierungsstelle zur Durchführung des Verfahrens und/oder zur Teilnahme am Verfahren anzugeben.

Die Aufgabe wird dabei durch die Merkmale des Anspruchs 1 gelöst. Das Bereitstellen eines operativen Zertifikats für das Automatisierungsgerät erfolgt dabei basierend auf zumindest einer dem Automatisierungsgerät zugeordneten ersten Kennung und zumindest einer einem Einbauort zugeordneten zweiten Kennung.

Das Verfahren zum sicheren Betreiben eines industriellen Automatisierungsgerätes in einem Automatisierungssystem umfasst dabei sowohl die Inbetriebnahme des industriellen Automatisierungsgeräts mit einem neuen operativen Zertifikat als auch das Neuausstellen von Zertifikaten im laufenden Betrieb nach Gerätetausch. Auch die Erneuerung von bereits abgelaufenen oder zurückgerufenen Zertifikaten kann mit dem erfindungsgemäßen Verfahren durchgeführt werden. Zertifikate werden beispielsweise dann zurückgerufen wenn eine CA kompromittiert wurde.

Ein operatives Zertifikat für das Automatisierungsgerät wird basierend auf zumindest einer im Automatisierungsgerät zugeordneten ersten Kennung und zumindest einer einem Einbauort zugeordneten zweiten Kennung bereitgestellt. Bereitstellen kann bspw. bedeuten, dass das operative Zertifikat direkt nach dem Ausstellen auf das Automatisierungsgerät geladen wird. Alternativ oder ergänzend kann das operative Zertifikat an einer zentralen Stelle zum Abruf durch das Automatisierungsgerät oder ein Inbetriebnahmegerät zur Verfügung gestellt werden.

Das operative Zertifikat verknüpft dabei die Funktion das Automatisierungsgeräts, die es gemäß einer Auslegung der industriellen Anlage des Automatisierungssystems innehaben soll, mit einem physikalischen Endgerät, das letztendlich in dieser Funktion an dem Einbauort in Betrieb genommen und dort betrieben werden soll. Das operative Zertifikat dient dabei zur Authentifizierung des Automatisierungsgeräts und/oder zur Verschlüsselung der Kommunikation mit und vom Automatisierungsgerät. Dies dient dazu, bei der Inbetriebnahme eine nachvollziehbare Basis für die Identität des Einbauortes bzw. der Funktion und des letztendlich verwendeten Automatisierungsgerätes zu bilden. Die dem Automatisierungsgerät zugeordnete erste Kennung kann dabei eine Seriennummer sein. Die erste Kennung kann dabei auch ein allgemeiner Gerätetyp sein, wenn in einem Automatisierungssystem mehrfach derselbe untereinander identische Gerätetyp verwendet wird. Sobald das operative Zertifikat auf dem Automatisierungsgerät vorhanden ist, ist es eindeutig identifizierbar und es kann sich gegenüber anderen Kommunikationsteilnehmern authentisieren bzw. authentifiziert werden. Mit dem bereitgestellten operativen Zertifikat kann das Automatisierungsgerät sicher betrieben werden. Das Automatisierungsgerät kann dabei zur Teilnahme an einer PKI Infrastruktur im Automatisierungssystem mittels des bereitgestellten operativen Zertifikats ausgebildet sein.

Die dem Einbauort zugeordnete zweite Kennung bestimmt letztendlich die Funktion, die das Automatisierungsgerät im Automatisierungssystem einnehmen soll. Die zweite Kennung ist dabei eine Bezeichnung, auch operative ID genannt, die das Automatisierungsgerät im Automatisierungssystem trägt oder die zweite Kennung ist eindeutig einer Bezeichnung des Automatisierungsgeräts zuordenbar. Dies kann durch eine, insbesondere maschinenlesbare, Kennzeichnung von Orten im Automatisierungssystem durchgeführt werden. Beispielsweise kann sich dabei um den Controller Nr. A1 in einem Gebäude Nr. B1, Raum R1 handeln. Eine Kennzeichnung könnte dann C1-B1-R1 lauten. Derartige Zuordnungen eines Endgeräts zu einem Einbauort, an dem das Gerät verbaut und betrieben werden soll, können in Engineering Systemen im Vorfeld vorgenommen, getestet und simuliert werden.

In einer weiteren Ausführungsform umfasst das Verfahren das Bestimmen zumindest einer dem Automatisierungsgerät zugeordneten ersten Kennung, insbesondere vor Ort im Automatisierungssystem am Einbauort. Ergänzend oder alternativ umfasst das Verfahren das Bestimmen zumindest einer dem Einbauort zugeordneten zweiten Kennung, insbesondere vor Ort im Automatisierungssystem am Einbauort. Das Bestimmen kann dabei einem Identifizieren der entsprechenden Datensätze entsprechen. Weiterhin kann das Bestimmen mittels einer Kamera, anhand des aktuell lokal verbundenen Geräts, anhand optischer Merkmale in der Fertigungsanlage, wie beispielsweise Kennzeichnungen von Säulen, anhand von NFC-Tags die zur Positionierung verteilt sind, anhand von Indoor-Navigation, oder anhand von Netzwerk-Accesspoints geschehen. Kombinationen der genannten Arten des Bestimmens sind problemlos möglich und flexibel an den Einsatzbereich anpassbar.

In einer weiteren Ausführungsform wird eine Aufzeichnung der ersten Kennung und/oder der zweiten Kennung bestimmt. Dies geschieht insbesondere vor Ort am Automatisierungsgerät. D.h. vor Ort am Automatisierungsgerät, das bereits an seinem Endverbleib im Automatisierungssystem angebracht wurde. Vor Ort kann insbesondere am Einbauort des Automatisierungsgeräts bedeuten. Die Aufzeichnung dient dabei dazu, die erste Kennung und die zweite Kennung miteinander zu verknüpfen. So kann später nachgewiesen werden, dass tatsächlich das Automatisierungsgerät mit der ersten Kennung an einem Einbauort mit der zweiten Kennung angebracht und in Betrieb genommen wurde bzw. sich bei einer Erneuerung eines abgelaufenen oder zurückgerufenen operativen Zertifikats weiterhin dort befindet. Besonders von Vorteil ist es, wenn die erste und die zweite Kennung durch ein Inbetriebnahmegerät mittels eines Fotos aufgezeichnet/aufgenommen werden. Ebenso denkbar ist es, dass ein Inbetriebnahmegerät eine lokale kabellose oder kabelgebundene Verbindung zum Automatisierungsgerät aufbaut, beispielsweise eine Bluetooth-, NFC- oder eine ad hoc WLAN-Verbindung. Über diese lokale Verbindung kann direkt die erste Kennung aus dem Automatisierungsgerät ausgelesen werden und die Aufnahme vom Einbauort direkt mit der ersten Kennung verknüpft werden. Diese Verknüpfung kann zur Absicherung mit einem kryptographischen Verfahren signiert oder sogar verschlüsselt werden. Auch kryptographische Hash-Verfahren bieten sich hier an.

In einer besonders vorteilhaften Weiterbildung wird eine Zertifikatsanfrage ausgegeben, die auf zumindest einen Teil der Aufzeichnung basiert. Ausgeben kann dabei umfassen, dass nachdem die dem Automatisierungsgerät zugeordnete erste Kennung und die dem Einbauort zugeordnete zweite Kennung aus der Aufzeichnung extrahiert werden und auf Basis von diesen Informationen eine Zertifikatsanfrage neu generiert wird, diese über ein vorhandenes Kommunikationssystem ausgegeben wird, z.B. an eine lokale Registrierungsstelle zur weiteren Verarbeitung gesandt wird.

Ausgeben kann dabei weiterhin umfassen, dass eine bereits bestehende Zertifikatsanfrage (z.B. eine bereits auf Basis von Daten des Automatisierungssystems befüllte Vorlage) auf Basis der aus der Aufzeichnung extrahierten Informationen validiert wird. Ausgeben kann dabei ergänzend oder alternativ umfassen, dass eine bestehende Zertifikatsanfrage angepasst wird. Dies kann jeweils unter Einbeziehung einer lokalen Registrierungsstelle geschehen.

In weiteren Schritten kann die Zertifikatsanfrage an eine Zertifizierungsstelle, im englischen auch CA "Certification Authority" gesendet werden. Die Zertifizierungsstelle oder eine Registrierungsstelle kann dabei die Zertifikatsanfrage ebenso von sich aus anfordern. Die Zertifikatsanfrage kann z.B. als ein certificate signing request (CSR) nach einem der PKCS Standards der RSA Laboratories oder eine certificate request message (CRM) gemäß Standard CRMF (RFC 4211) ausgebildet sein.

Es ist denkbar, dass die Zertifikatsanfrage in ein Paket/Telegramm gepackt wird und mit weiteren Informationen ergänzt wird. Zu den weiteren Informationen zählen bspw. die Aufzeichnung oder daraus extrahierte Informationen wie eine Seriennummer und eine Kennung eines Einbauorts.

Die Zertifikatsanfrage kann dabei vom Automatisierungsgerät selbst ausgegeben werden, dies kann direkt mit bestehender Kommunikationsverbindung initiiert werden oder vom Inbetriebnahmegerät initiiert werden, wenn z.B. eine Aufzeichnung erstellt wurde und somit die notwendigen Daten vorhanden sind.

Weiterhin kann zum Bereitstellen des operativen Zertifikats die Aufzeichnung von einer lokalen Registrierungsstelle, auch "local registration authority" LRA, ausgewertet werden. Die lokale Registrierungsstelle kann dabei beispielsweise dazu ausgebildet sein, eine erste Kennung und/oder eine zweite Kennung aus der Aufzeichnung zu extrahieren und eine Zertifikatsanfrage zu stellen oder zu ergänzen. Dies kann je nach Bestandteilen der Aufzeichnung mittels Auslesen aus den Vorhandenen Daten (wenn die Seriennummer Teil eines Herstellerzertifikats ist) geschehen. Auch Bildverarbeitungssysteme, die zur Extraktion der ersten und/oder der zweiten Kennung ausgebildet sind, können zum Einsatz kommen.

In einer bevorzugten Ausführungsform wird die Aufzeichnung durch ein Inbetriebnahmegerät aufgenommen und/oder die Aufzeichnung durch ein Inbetriebnahmegerät initiiert. Es ist dabei denkbar, dass das Inbetriebnahmegerät selbst die Aufzeichnung erstellt. Dies kann z.B. mittels einer Kamera, die optische Erkennungsmerkmale aufzeichnet und die anschließend ausgewertet werden, durchgeführt werden. Alternativ oder ergänzend können auch weitere Sensordaten, die einen Einbauort indizieren, verwendet werden. Es kann eine entsprechende Funktion in dem Automatisierungsgerät aufgerufen werden, dass dementsprechend selbst zumindest Teile einer Aufzeichnung von der ersten und/oder zweiten Kennung erstellt.

In Fällen, in denen das Automatisierungsgerät bereits ein vom Hersteller zur Verfügung gestelltes Herstellerzertifikat aufweist, kann die erste Kennung auf Basis eines Herstellerzertifikats ermittelt werden. Dabei kann die erste Kennung sowohl ein Teil des oder das Herstellerzertifikat selbst sein. Das Herstellerzertifikat umfasst dabei eine eindeutige Identifikation hinsichtlich des verwendeten physikalischen Endgeräts mit zumindest einem öffentlichen Teil des kryptografischem Schlüsselmaterials. Der private Schlüssel des Herstellerzertifikats kann dazu dienen eine Zertifikatsanfrage zu signieren. Um ein neues Zertifikat zu beantragen kann dieser erneut verwendet werden um einen Originalitätsnachweis zu erbringen, dass zwischenzeitlich das Endgerät nicht ausgetauscht wurde.

In einer weiteren vorteilhaften Ausführungsform wird die Aufzeichnung mit einem Zertifikat eines Inbetriebnahmegeräts oder einem Herstellerzertifikat des Automatisierungsgeräts authentifiziert bzw. authentisiert und identitätsgeschützt. Beispielsweise kann die Aufzeichnung mit einem privaten Schlüssel signiert werden, dessen öffentlicher Schlüssel Teil des Zertifikats ist. Mittels des öffentlichen Schlüssels des Zertifikats kann diese Signatur verifiziert werden. Das Verifizieren der Signatur kann durch eine lokale Registrierungsstelle durchgeführt werden. Der Vorteil ist, dass so die Aufzeichnung mittels kryptographischer Mechanismen authentifiziert werden kann. Dies erhöht die Sicherheit weiter und erschwert Manipulationen im Nachhinein.

In einer weiteren Ausführungsform werden zum Bestimmen der zweiten Kennung Sicherheitsinformationen von bereits installierten Automatisierungsgeräten, insbesondere benachbart angeordneten installierten Automatisierungsgeräten, ausgewertet. Sind bereits Automatisierungsgeräte mit operativen Zertifikaten versehen worden, so kann anhand dieser Informationen der Einbauort eingegrenzt werden oder Einbauorte ausgeschlossen werden, für die bereits ein Zertifikat existiert. Die Auswertung kann von einer lokalen Registrierungsstelle durchgeführt werden und einem Inbetriebnahmegerät zur Verfügung gestellt werden. Dies beschleunigt die Inbetriebnahme und verbessert die Fehlertoleranz des Verfahrens.

In einer besonders sicheren Ausführungsform weist die Aufzeichnung zusätzlich zur ersten Kennung, der zweiten Kennung und gegebenenfalls einer Signatur durch das Herstellerzertifikat zusätzlich eine Information über Zeit und/oder Ort der Aufnahme auf. Diese Information kann auch eine gesicherten Zeit- und/oder Ortsinformationen sein und können über entsprechende Zeitserver oder beispielsweise über einen satellitengestütztes Navigationssystem, wie z.B. der Public Regulated Service (PRS) von Galileo, angeboten werden.

In einer weiteren vorteilhaften Ausführungsform kann anhand des operativen Zertifikats eine Konfiguration aus einem Engineering System auf das Automatisierungsgerät geladen werden. Das Automatisierungsgerät kann sich gegenüber dem Engineering System authentifizieren, wobei aus dem operativen Zertifikat direkt eine dem Automatisierungsgerät und dem Einbauort zugewiesene operative ID entnehmbar ist. Damit kann das Engineering System die Anfrage des physikalischen Automatisierungsgeräts einem geplanten Gerät und dessen geplanter Funktionalität zuordnen. Die Konfigurationsdaten; z.B. ein Steuerungsprogramm und Parametersätze, können dann dementsprechend bereitgestellt werden; z.B. über eine Kommunikationsschnittstelle (z.B. Ethernet, WLAN, Feldbussysteme, ...).

Die Aufgabe wird weiterhin durch ein Inbetriebnahmegerät und eine Registrierungsstelle gelöst. Das Inbetriebnahmegerät ist dabei zum Initiieren und/oder Bestimmen einer Aufzeichnung von einer einem Automatisierungsgerät zugeordneten ersten Kennung und zumindest einer einem Einbauort zugeordneten zweiten Kennung ausgebildet. Das Inbetriebnahmegerät ist ferner zum Anfordern und/oder Bereitstellen der Aufzeichnung zum Bereitstellen eines operativen Zertifikats für das Automatisierungsgerät basierend auf zumindest der ersten Kennung und der zweiten Kennung ausgebildet. Ein derartiges Inbetriebnahmegerät kann mehrere mögliche Ausführungsformen des Verfahrens unterstützen.

Die Registrierungsstelle kann dabei als ein sogenanntes "Edge-Device" ausgebildet sein, also ein Gerät, das die Schnittstelle zwischen Automatisierungssystem und externem Netzwerk (z.B. Internet) darstellt.

Weiterhin wird die Aufgabe durch ein Automatisierungsgerät aufweisend eine erste Kennung gelöst. Die erste Kennung ist vorteilhaft derart ausgebildet, mittels einer Aufzeichnung bestimmt zu werden. Das Automatisierungsgerät ist vorteilhaft derart ausgebildet, ein operatives Zertifikat anzufordern. Das Automatisierungsgerät ist in einer vorteilhaften Ausführungsform dazu ausgebildet an einer PKI Infrastruktur im Automatisierungssystem mittels des operativen Zertifikats teilzunehmen. Das Automatisierungsgerät weist in einer vorteilhaften Weiterbildung eine Anzeigevorrichtung und/oder eine Ausgabevorrichtung auf, die zur Anzeige und/oder Ausgabe der ersten Kennung und/oder eines Herstellerzertifikats ausgebildet ist. Die Anzeigevorrichtung kann dabei als ein Display ausgebildet sein. Es ist ebenso denkbar, dass im Produktionsprozess des Automatisierungsgeräts bereits Anzeigevorrichtungen eingebracht oder aufgebracht werden. Diese können maschinenlesbar sein, auch über Funk. Die Ausgabevorrichtung kann als Datenport, wie beispielsweise USB, ausgebildet sein.

Im Folgenden wird die Erfindung anhand der in den Figuren dargestellten Ausführungsbeispiele näher beschrieben und erläutert. Es zeigen:
- FIG 1: ein Automatisierungsgerät und eine Ausführungsform des Verfahrens,
- FIG 2: zwei Automatisierungsgeräte und eine weitere Ausführungsform des Verfahrens,
- FIG 3: ein Automatisierungsgerät und eine weitere Ausführungsform des Verfahrens,
- FIG 4: ein schematisches Ablaufdiagramm einer Ausführungsform des Verfahrens,
- FIG 5: ein zweites schematisches Ablaufdiagramm einer zweiten Ausführungsform des Verfahrens und
- FIG 6: ein mögliches Ablaufdiagramm des Verfahrens.

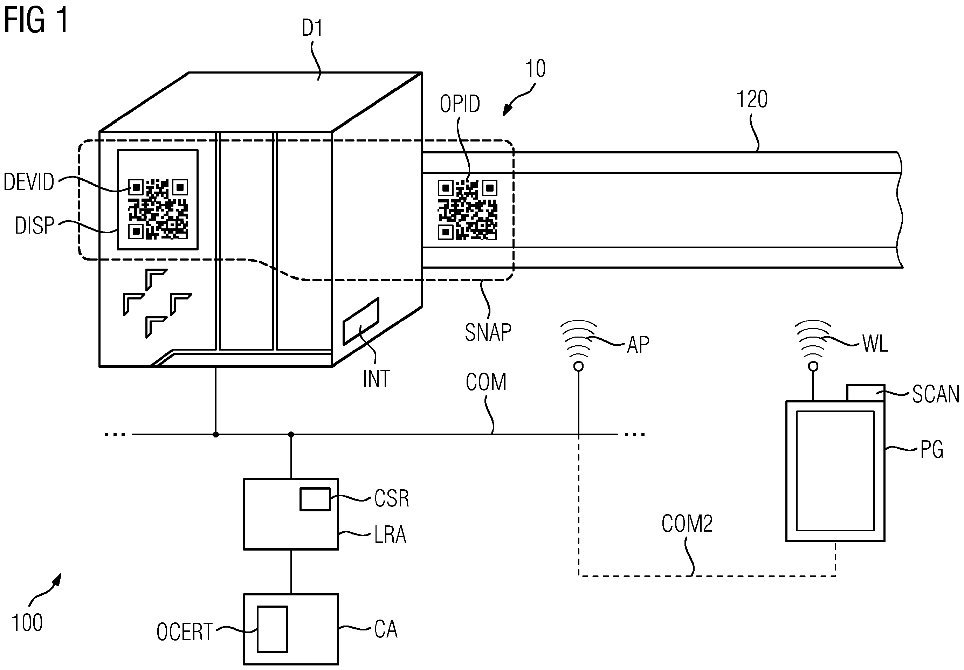

FIG 1 zeigt ein Automatisierungsgerät D1 in einem industriellen Automatisierungssystem 100, wobei das Automatisierungsgerät D1 an einem Befestigungssystem 120, hier eine Befestigungsschiene, angebracht ist. Das Befestigungssystem 120 weist eine zweite Kennung OPID auf, in diesem Fall einen optisch auslesbaren QR-Code. Das Befestigungssystem 120 ist dabei als Einbauort 10 für das Automatisierungsgerät 10 vorgesehen. Die zweite Kennung OPID kann dabei aber auch jedes eindeutig zuordenbare Merkmal des Befestigungssystems 120 oder des Einbauorts 10 sein. Besonders geeignet sind optisch oder elektronisch auslesbare Kennzeichen, wie Barcodes, NFC-Tags oder auch maschinenlesbarer Text. Das Automatisierungsgerät D1 weist als eine Anzeigevorrichtung DISP ein Display auf, auf dem, z.B. direkt nach dem ersten Anschalten eine erste Kennung DEVID angezeigt wird. Als eine Ausgabevorrichtung weist das Automatisierungsgerät D1 eine Schnittstelle INT auf, über die ebenfalls die erste Kennung DEVID ausgegeben werden kann.

Weiterhin ist ein Inbetriebnahmegerät PG gezeigt, dass eine Aufzeichnungsvorrichtung SCAN und ein Display DISP aufweist. Das Inbetriebnahmegerät PG ist dabei als ein mobiles Endgerät ausgebildet und kann dabei als ein Smartphone, ein Tablet, ein industrielle Programmiergerät oder weitere geeignete Geräte ausgebildet sein. Das Inbetriebnahmegerät PG weist außerdem eine drahtlose Schnittstelle WL sowie eine optional eine weitere z.B. drahtgebundene lokale Schnittstelle COM2 auf. Die Schnittstelle COM2 ist zur Anbindung an ein Kommunikationssystem COM ausgebildet ist, über das auch das Automatisierungsgerät D1 kommunizieren kann. Dabei kann es sich beispielsweise um einen Ethernet-basierten Industriebus, wie PROFINET, handeln. Über die Kommunikationsverbindung COM könnte auch die erste Kennung DEVID ausgegeben werden, hier muss allerdings sichergestellt sein, dass die ortsbezogene Zuordnung, beispielsweise durch eine direkte Verbindung, oder Kenntnis der konkreten IP Adresse des Automatisierungsgeräts D1, sichergestellt wird. Weiterhin ist eine lokale Registrierungsstelle LRA gezeigt, die an das Kommunikationssystem COM angebunden ist. Das Kommunikationssystem COM des Automatisierungssystems 100 weist außerdem einen Access-Point AP auf, der eine drahtlose Kommunikation mit dem Kommunikationssystem COM ermöglicht. Die aufgezeigten Schnittstellen WL, COM2 sind dabei nur beispielhaft und können bedarfsweise verwendet werden. In Sonderfällen, beispielsweise in entlegenen Teilen einer Fabrikhalle, die noch keine Drahtlosnetzwerke aufweisen, ist sogar ein Durchführen des Verfahrens ohne Kommunikationsverbindung (Offline) möglich. Solange das Gerät, von dessen Einbauort und erster Kennung eine Aufzeichnung existiert, nicht ausgetauscht oder versetzt wird kann das Verfahren auch zeitlich versetzt/verzögert durchgeführt werden.

Eine Aufzeichnung SNAP umfasst die erste Kennung DEVID des Automatisierungsgeräts D1 sowie die zweite Kennung OPID des Einbauorts 10. Das Inbetriebnahmegerät PG kann beispielsweise als Aufzeichnungsvorrichtung SCAN einen Scanner aufweisen, der beide CR-Codes in einen gemeinsamen Scan aufnimmt und speichert. Es kann sich bei der Aufzeichnungsvorrichtung SCAN auch um eine Kamera handeln, die beide Kennungen OPID, DEVID gemeinsam aufnimmt. Es ist ebenso denkbar, dass solange das Inbetriebnahmegerät PG über seine drahtlose Schnittstelle PL mit einem dem Einbauort zuordenbaren Access-Point AP verbunden ist, die Kennungen nacheinander eingescannt werden und zu einer Aufzeichnung unter Berücksichtigung des aktuell verbundenen lokalen Access-Points AP miteinander verknüpft werden. So ist später eine Identifikation möglich, dass sich das Inbetriebnahmegerät auch tatsächlich vor Ort am Einbauort 10 befunden hat. Wird die drahtgebundene lokale Schnittstelle COM2 verwendet, kann diese ebenso als Indiz dafür dienen, dass das Inbetriebnahmegerät bei der Aufnahme der Aufzeichnung SNAP vor Ort am Einbauort 10 war. Je nach Sicherheitslevel (z.B. gemäß IEC 62443) können dabei verschiedene Stufen von Information zur Zuordnung des Einbauorts 10 zum konkreten Automatisierungsgerät D1, also der Kennungen OPID, DEVID untereinander verwendet werden. Es ist denkbar, dass in Hochsicherheitsbereichen ein Automatisierungsgerät D1 mittels mehrerer Aufzeichnungen, die von verschiedenen Geräten und/oder Personen erstellt werden, identifiziert und zugeordnet wird.

Weiterhin ist in FIG 1 beispielhaft eine lokale Registrierungsstelle LRA (im englischen auch "local registration authority") und eine Zertifizierungsstelle CA (im englischen auch certification authority) gezeigt. Bei der lokale Registrierungsstelle LRA handelt es sich um den technischen und administrativen Prozess zur Erzeugung der digitalen Identität, z.B. des Automatisierungsgeräts D1. Die Zertifizierungsstelle CA ist für das Erstellen, die Ausgabe, Verwaltung und Sperrung/Zurückziehung von digitalen Zertifikaten zuständig und fungiert innerhalb einer Sicherheitsinfrastruktur als vertrauenswürdige Instanz. Mit einer Zertifikatsanfrage CSR (im englischen auch "certificate signing request"), die durch ein Inbetriebnahmegerät PG oder das Automatisierungsgerät D1 selbst erstellt/bearbeitet werden kann wird der lokale Registrierungsstelle LRA signalisiert, dass ein Gerät ein neues operatives Zertifikat OCERT benötigt. Die lokale Registrierungsstelle LRA kann eine Prüfung der Zertifikatsanfrage CSR durchführen und sie ggf. mit Informationen zur Identität des Geräts aus dem Automatisierungsnetzwerk oder von übergeordneten Ebenen, z.B. aus einem Engineerings System, anreichern. Nach Prüfungen durch die Zertifizierungsstelle CA, z.B. Prüfung der Eindeutigkeit, generiert die Zertifizierungsstelle CA ein operatives Zertifikat OCERT und leitet dieses über die lokale Registrierungsstelle LRA an das Automatisierungsgerät D1 weiter. Wenn das Automatisierungsgerät noch keine Kommunikationsverbindung COM aufweist, so kann das operatives Zertifikat OCERT dem Inbetriebnahmegerät PG zur Verfügung gestellt werden und z.B. über einen Wartungszugang INT direkt auf das Automatisierungsgerät aufgespielt werden. Der Wartungszugang INT kann dabei eine lokale Kommunikationsschnittstelle, wie ein USB Port oder proprietäre Lösungen aus dem Automatisierungsbereich sein.

Die Registrierungsstelle LRA kann zur Ausführung mehrere Ausführungsformen des Verfahrens ausgebildet sein. Sie kann dazu z.B. ein Modul aufweisen, das zur Auswertung von Herstellerzertifikaten MCERT ausgebildet ist. Weiterhin kann sie weitere Module aufweisen, die zum Erstellen, anreichern und prüfen von Zertifikatsanfragen CSR ausgebildet sind. Die Registrierungsstelle LRA kann in eine Zertifizierungsstelle CA integriert sein oder diese aufweisen.

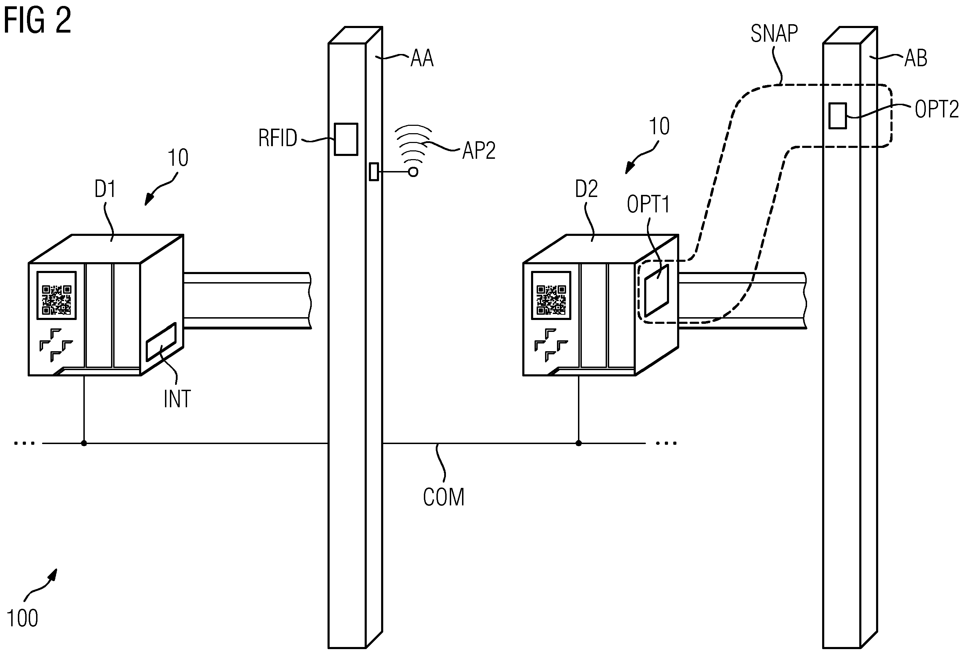

FIG 2 zeigt unter Verwendung der aus FIG 1 bekannten Bezugszeichen zwei Automatisierungsgeräte D1, D2. Das erste Automatisierungsgerät D1 ist dabei an einer Säule AA angeordnet, die beispielsweise eine Säule in einer Fabrikhalle sein kann, wobei AA als Ortsbezeichnung dient. Die Säule AA weist dabei ein Funkidentifizierungsmerkmal RFID, beispielsweise ein im Nahbereich funkauslesbares NFC Tag auf. Weiterhin weist die Säule AA einen Access-Point AP2 auf.

Ein zweites Automatisierungsgerät D2 ist an einer Säule AB angeordnet und weist ein erstes optisches Erkennungsmerkmal OPT1 auf. Die Säule AB weist ein zweites optisches Erkennungsmerkmal OPT2 auf. Eine Aufzeichnung SNAP wird für das zweite Automatisierungsgerät D2 beispielsweise von einem Inbetriebnahmegerät PG, wie es in FIG 1 gezeigt wurde, aus den beiden optischen Erkennungsmerkmal OPT1, OPT2 erstellt. Das optische Erkennungsmerkmal OPT1 dient dabei als erste Kennung DEVID, das optische Erkennungsmerkmal OPT2 dient als zweite Kennung OPID. Damit ist die Zuordnung zwischen dem zweiten Automatisierungsgerät D2 und dem Einbauort 10 an der Säule AB eindeutig möglich. Das zweite Automatisierungsgerät D2 kann dabei beispielsweise eine Seriennummer in Form eines maschinenlesbaren Codes oder eine Seriennummer in alphanumerischer Form, die sichtbar auf dem Gerät angebracht ist, aufweisen. Eine derartige alphanumerische Kennung kann beispielsweise mit Bilderkennungsalgorithmen in einer zentralen Registrierungsstelle LRA ausgewertet werden. Mittlerweile ist die Rechenleistung portabler Geräte ausreichend, um eine solche Bildverarbeitung auch direkt im Inbetriebnahmegerät PG durchzuführen.

Das erste Automatisierungsgerät D1 weist eine lokale Schnittstelle INT auf, wobei das Inbetriebnahmegerät direkt mit dieser lokalen Schnittstelle verbindbar ist. Dabei kann es sich um einen USB-, seriellen und jeglichen proprietären Port handeln. Besonders sichere Geräte können weiterhin eine optische Schnittstelle zur Kommunikation mit dem Inbetriebnahmegerät aufweisen. Das Inbetriebnahmegerät PG kann weiterhin ergänzend oder alternativ zur drahtlosen Kommunikation mit dem Automatisierungsgerät D1, z.B. mittels Bluetooth, NFC, Ad-Hoc-WLAN und anderen lokale Funkstandards ausgebildet sein. Das Funkidentifizierungsmerkmal RFID der Säule AA ist dabei dergestalt, dass es nur ausgelesen werden kann, wenn eine Aufzeichnung SNAP vor Ort am Einbauort 10 erstellt wird. Damit ist eine Zuordnung einer ersten Kennung DEVID, hier beispielsweise eine über die lokale Schnittstelle INT ausgelesene Seriennummer zu einer zweiten Kennung OPID, hier beispielsweise anhand des Einbauorts 10 an der Säule AA, die mittels des Funkidentifizierungsmerkmal RFID identifizierbar ist, möglich. Wenn das Inbetriebnahmegerät PG vor Ort am Einbauort 10 das Funkidentifizierungsmerkmal RFID ausliest und gleichzeitig mit dem Automatisierungsgerät D1 verbunden ist, kann von diesem Zustand somit eine Aufzeichnung SNAP, z.B. in Form eines Snapshots, erstellt werden. Alternativen, wie sie für das zweite Gerät oder zu FIG 1 beschrieben wurden, sind in Kombination ergänzend oder alternativ möglich. Mehrere Kennungen unterschiedlicher Art können miteinander kombiniert werden.

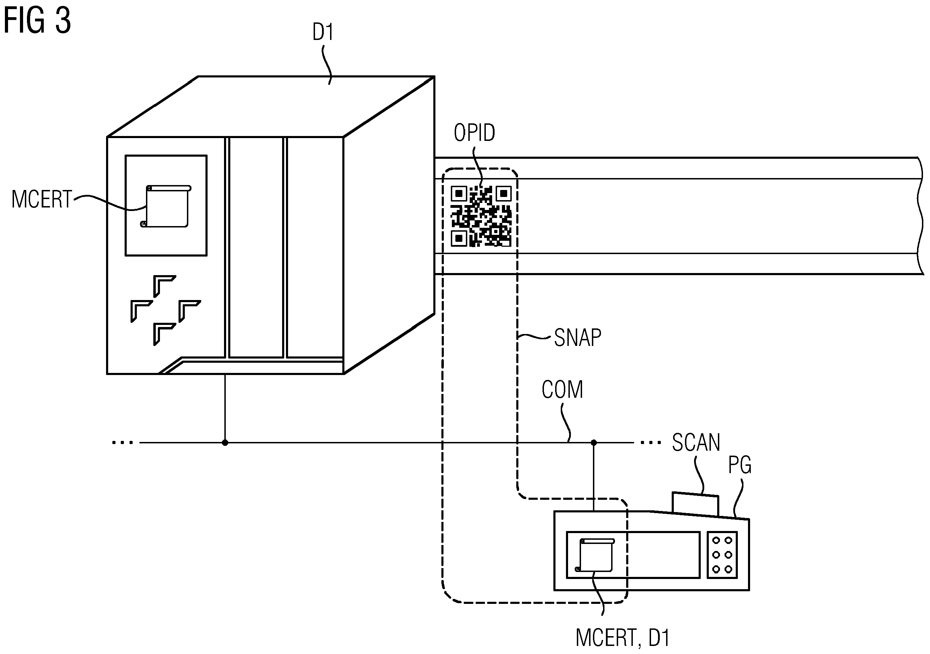

FIG 3 zeigt ein Automatisierungsgerät D1, das bereits Herstellerzertifikat MCERT, z.B. ein vom Hersteller des Automatisierungsgeräts D1 auf das Automatisierungsgerät D1 geladenes Zertifikat, aufweist. Das Inbetriebnahmegerät PG liest das Herstellerzertifikat MCERT des Automatisierungsgeräts D1 über eine lokale drahtgebundene oder drahtlose Verbindung aus. Die Aufzeichnung SNAP wird von dem Herstellerzertifikat MCERT bzw. teilen davon und der zweiten Kennung OPID, der lokalen Einbauinformation vor Ort am Einbauort 10 angefertigt. Die zweite Kennung OPID ist wie aus FIG 1 bekannt als QR Code ausgebildet. Diese kann aber ebenso wie in den vorhergehenden Figuren gezeigt als Funkidentifizierungsmerkmal RFID oder weiteres Kennzeichen ausgebildet sein.

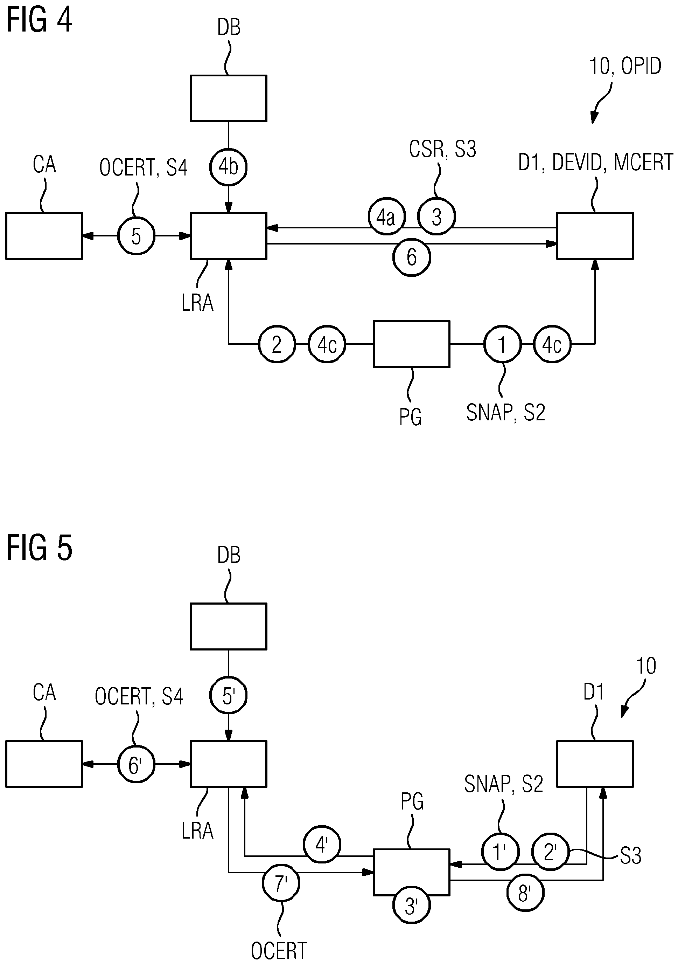

FIG 4 zeigt schematisch eine mögliche Ausführungsform. Zunächst wird der Einbauort 10 des Automatisierungsgeräts D1 vorbereitet. Dazu können beispielsweise Leitungen verlegt und Halterungen (Einbauahmen, Rack, Schaltschrank, etc.) angebracht werden. Der Einbauort 10, also die Position des zu installierenden Gerätes in einem Automatisierungssystem 100, wird mit einer eindeutigen zweiten Kennung OPID gekennzeichnet und ist damit identifizierbar. Die aus den vorhergehenden Figuren bekannten Ausführungsformen der zweiten Kennung sind hier anwendbar. Im Folgenden wird beispielhaft eine Ausführungsform des Verfahrens durchgeführt. Die Reihenfolge kann dabei geändert werden und ist nicht verbindlich.

Zu 1: Auf dem Automatisierungsgeräts D1 ist in der Regel ein Gerätelabel mit eindeutigen Bezeichnern für das Gerät, z.B. die Seriennummer angebracht. Der eindeutige Bezeichner dient als eine erste Kennung DEVID des Automatisierungsgeräts D1, welche auch in einem Herstellerzertifikat MCERT enthalten sein kann. Die erste Kennung DEVID wird mit einem Label des Einbauortes, wobei das Label als eine zweite Kennung OPID dient, zusammen fotografiert. Die Fotographie dient als Aufzeichnung SNAP. Als Inbetriebnahmegerät PG kann z.B. ein Smartphone mit einer entsprechenden Software dienen. Auf diese Weise kann das Bestimmen S2 der Aufzeichnung SNAP der ersten Kennung und/oder der zweiten Kennung vor Ort, insbesondere am Einbauort 10 im Automatisierungssystem 100 erfolgen.

Das Inbetriebnahmegerät PG kann dem Installateur einen Installationsplan anzeigen. Er wählt dann über eine Eingabe (Touchscreen etc.) den aktuellen Einbauort 10 aus, an dem er sich gerade befindet; bzw. dies wird automatisch über eine Positionserkennung durchgeführt. Anschließend wird eine Aufzeichnung SNAP des Automatisierungsgeräts D2 bzw. dessen erster Kennung DEVID erstellt. Die zweite Kennung OPID kann in diesem Fall aus dem elektronischen Installationsplan ermittelt werden.

Zu 2: Die Aufzeichnung SNAP, z.B. ein Foto aufweisend eine erste Kennung DEVID und eine zweite Kennung OPID, wird an eine Registrierungsstelle LRA übertragen. Dies kann drahtlos, über eine Netzwerkverbindung oder durch eine lokale Verbindung, z.B. eine USB-Schnittstelle, geschehen. Die lokale Registrierungsstelle LRA kann sich beispielsweise im Automatisierungssystem 100, im Intranet des Betreibers oder Installateurs, oder in einem Rechenzentrum (z.B. in einer Cloud) befinden. Bei der drahtlosen bzw. Netzwerkübertragung ist eine Signatur der Dateien durch den Installateur bzw. sein Inbetriebnahmegerät PG oder die darauf installierte Software, der die Aufzeichnung SNAP erstellt hat, und/oder die Verwendung eines sicheren Übertragungsprotokolls sinnvoll, um eine unerwünschte Veränderung der Aufzeichnung SNAP bei der Übertragung zu unterbinden und die Authentizität der Aufzeichnung SNAP verifizieren zu können.

In der LRA werden aus der Aufzeichnung SNAP die erste Kennung DEVID und die zweite Kennung OPID extrahiert und z.B. in einer Datenbank eines Engineering Systems abgespeichert. Bei Beschriftungen mit lesbaren Zeichen werden vorzugsweise elektronische Verfahren wie Bilderkennung eingesetzt; es können für die Erkennung der beiden IDs auch spezielle, elektronisch gut lesbare Verfahren wie Barcode oder QR-Code vorteilhaft eingesetzt werden. Es ist vorteilhaft, ein Verfahren mit Prüfsumme o.ä. verwendet werden, um Fehler beim Einlesen bzw. Decodieren zu erkennen.

Zu 3: Das Automatisierungsgerät D1 gibt eine Zertifikatsanfrage CSR aus und sendet diese zur Registrierungsstelle LRA, z.B. sobald es eingeschaltet wird und eine Netzwerkverbindung verfügbar ist. Das Ausgeben S3 kann also direkt vom Automatisierungsgerät D1 selbst durchgeführt werden. Die Zertifikatsanfrage CSR kann zum Nachweis des Besitzes des zugehörigen privaten Schlüssels teilweise selbstsigniert sein und kann weiterhin zusätzlich mit dem Herstellerzertifikat MCERT signiert sein. Durch das verwendete Herstellerzertifikat MCERT ist der Registrierungsstelle LRA die erste Kennung DEVID bekannt, bzw. diese kann direkt aus dem Herstellerzertifikat MCERT extrahiert werden.

Wurde das Automatisierungsgerät D1 für eine bestimmte zweite Kennung OPID, also für einen bestimmten Einbauort 10 vorkonfiguriert, so kann die Registrierungsstelle LRA zusätzlich prüfen, ob das Automatisierungsgerät D1 für die richtige zweite Kennung OPID ein operatives Zertifikat OCERT beantragt, da sie durch das fotografische Pairing, also die Aufzeichnung SNAP, zusätzliche Informationen hat. Ist das Gerät noch nicht vorkonfiguriert, so verwendet die Registrierungsstelle LRA die zweite Kennung aus der Aufzeichnung SNAP.

Zu 4: Die folgenden Möglichkeiten ergeben sich zur Verteilung des Herstellerzertifikats MCERT.
4a: Das Automatisierungsgerät D1 sendet sein Herstellerzertifikat MCERT, z.B. zusammen mit der Zertifikatsanfrage CSR, an die Registrierungsstelle LRA.
4b: Alternativ oder ergänzend kann die Registrierungsstelle LRA das Herstellerzertifikat MCERT von einem Dienst, z.B. einer Zertifikatsdatenbank DB, abfragen.
4c: Alternativ oder ergänzend kann das Gerätelabel direkt das Herstellerzertifikat MCERT oder einen öffentlichen Schlüssel aus dem Herstellerzertifikat MCERT z.B. als QR-Code beinhalten.

Zu 5: Die Registrierungsstelle LRA prüft die Zertifikatsanfrage CSR (Gültigkeit der Signatur als Proof-of-Possession des zugehörigen privaten Schlüssels, Signatur mit Herstellerzertifikat, sowie Herstellerzertifikat selbst), und ergänzt die Zertifikatsanfrage CSR bei Bedarf mit der für das Automatisierungsgerät D1 vorgesehenen zweiten Kennung OPID und weiteren Konfigurationsdaten. Die Registrierungsstelle LRA leitet die Zertifikatsanfrage nach Prüfung an eine Zertifizierungsstelle CA zur Zertifikatserstellung des operativen Zertifikats OCERT weiter. Das Bereitstellen S4 kann somit durch die Zertifizierungsstelle CA ausgeführt werden, die ein operatives Zertifikat OCERT für das Automatisierungsgerät D1 auf Basis der vorhergehenden Schritte bereitstellt.

Zu 6: Die Registrierungsstelle LRA leitet das operative Zertifikat an das Gerät weiter. Dies kann optional auch über das Inbetriebnahmegerät PG erfolgen.

FIG 5 zeigt eine alternative Ausführungsform ähnlich zu FIG 4, wobei das Automatisierungsgerät D1 kein Herstellerzertifikat MCERT aufweist.

Zu 1`: Das Bestimmen S2 einer Aufzeichnung SNAP kann wie folgt umgesetzt werden. Der Bezeichner des Einbauortes 10, also eine zweite Kennung OPID wird fotografiert. Als Inbetriebnahmegerät PG dient ein Inbetriebnahmegerät PG wie es aus den vorhergehenden Figuren, insb. FIG 1-3, bekannt ist. Eine erste Kennung DEVID des Automatisierungsgeräts D1 kann ebenso in der Aufzeichnung SNAP enthalten sein.

Zu 2': Das Inbetriebnahmegerät PG ruft über eine physikalisch sichere, z.B. lokale, drahtgebundene oder drahtlose Schnittstelle eine Zertifikatsanfrage CSR vom Automatisierungsgerät D1 ab. Das Ausgeben S3 der Zertifikatsanfrage CSR kann auf diese Weise umgesetzt werden, kann aber ebenso in späteren Stadien geschehen. Dieser Vorgang kann vom Inbetriebnahmegerät PG angestoßen werden, oder das Automatisierungsgerät D1 startet den Prozess (z.B. beim Hochfahren ohne operative Zertifikate OCERT) selbst. Das Automatisierungsgerät D1 kann zunächst ein Schlüsselpaar (z.B. RSA) erzeugen und anschließend mit diesem Paar eine selbstsignierte Zertifikatsanfrage CSR erzeugen. Diese Zertifikatsanfrage CSR enthält auch die erste Kennung DEVID (z.B. die Seriennummer des Automatisierungsgerätes vom Hersteller), und wird dann auf das Inbetriebnahmegerät PG übertragen. Das Bestimmen S11 der dem Automatisierungsgerät D1 zugeordneten ersten Kennung DEVID und/oder das Bestimmen S12 zumindest der dem Einbauort 10 zugeordneten zweiten Kennung OPID kann so durchgeführt werden.

Zu 3`: Die Aufzeichnung SNAP und die zugehörige Zertifikatsanfrage CSR werden zusammen, z.B. vom Inbetriebnahmegerät PG, in ein Datenpaket gepackt und können zusätzlich digital signiert werden.

Zu 4`: Das Datenpaket wird vom Inbetriebnahmegerät PG an eine Registrierungsstelle LRA übertragen. Die Registrierungsstelle LRA prüft beim Empfang des Datenpakets die Signatur des Datenpaketes.

Zu 5`: Aus der Aufzeichnung SNAP wird von der Registrierungsstelle LRA die zweite Kennung OPID des Einbauorts 10 extrahiert und kann z.B. mit einer Datenbank DB abgeglichen werden. Die Datenbank DB kann ein Teil eines Engineering Systems sein. Analog zu 5 aus FIG 4 kann die zweite Kennung OPID extrahiert oder erfasst werden.

Zu 6`: Die Registrierungsstelle LRA prüft die Zertifikatsanfrage CSR und ergänzt ggf. Informationen, die von der Zertifizierungsstelle CA benötigt werden. Die Registrierungsstelle LRA leitet die anschließend Zertifikatsanfrage CSR an eine Zertifizierungsstelle CA zur Zertifikatserstellung eines operativen Zertifikats OCERT für das Automatisierungsgerät D1 mit der ersten Kennung DEVID und der zweiten Kennung OPID am Einbauort 10.

Zu 7`: Die Registrierungsstelle LRA leitet das operative Zertifikat OCERT über das Inbetriebnahmegerät PG oder eine andere Verbindung an das Automatisierungsgerät D1 weiter. Es ist ebenso denkbar, dass die Registrierungsstelle LRA das operative Zertifikat OCERT auf einem anderen Weg an das Automatisierungsgerät D1 weiterleitet. Dies kann direkt geschehen, über ein Engineering System in dem zunächst alle Zertifikate gesammelt werden oder mit weiteren Übertragungsmethoden.

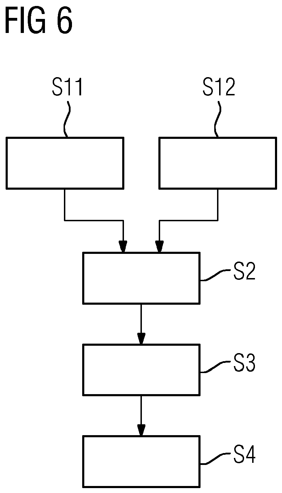

FIG 6 zeigt ein mögliches Ablaufdiagramm einer Ausführungsform des Verfahrens, umfassend die Schritte:
- Bestimmen S11 zumindest einer dem Automatisierungsgerät D1, D2 zugeordneten ersten Kennung DEVID,
- Bestimmen S12 zumindest einer dem Einbauort 10 zugeordneten zweiten Kennung OPID,
- Bestimmen S2 einer Aufzeichnung SNAP der ersten Kennung und/oder der zweiten Kennung vor Ort, insbesondere am Einbauort 10 im Automatisierungssystem 100,
- Ausgeben S3 einer Zertifikatsanfrage CSR, wobei die Zertifikatsanfrage CSR zumindest auf einem Teil der Aufzeichnung SNAP basiert und
- Bereitstellen S4 eines operativen Zertifikats OCERT für das Automatisierungsgerät D1, D2 basierend auf zumindest einer dem Automatisierungsgerät D1, D2 zugeordneten ersten Kennung DEVID und zumindest einer einem Einbauort 10 zugeordneten zweiten Kennung OPID.

Die gezeigte Reihenfolge ist dabei nicht verbindlich. Es können Schritte übersprungen werden, z.B. wenn das Ergebnis deren Ausführung bereits zur Verfügung steht. Die Reihenfolge kann ebenso geändert werden.

Zusammenfassend betrifft die Erfindung ein Verfahren zum sicheren Betreiben eines industriellen Automatisierungsgeräts D1, D2 in einem Automatisierungssystem 100 umfassend: Bereitstellen S4 eines operativen Zertifikats OCERT für das Automatisierungsgerät D1, D2 basierend auf zumindest einer dem Automatisierungsgerät D1, D2 zugeordneten ersten Kennung DEVID und zumindest einer einem Einbauort 10 zugeordneten zweiten Kennung OPID. Die Erfindung betrifft weiterhin ein Automatisierungsgerät D1, D2, ein Inbetriebnahmegerät PG sowie eine Registrierungsstelle LRA.

## Patentansprüche

1. Verfahren zum sicheren Betreiben eines industriellen Automatisierungsgeräts (D1, D2) in einem Automatisierungssystem (100) umfassend:
Bereitstellen (S4) eines operativen Zertifikats (OCERT) für das Automatisierungsgerät (D1, D2) basierend auf zumindest einer dem Automatisierungsgerät (D1, D2) zugeordneten ersten Kennung (DEVID) und zumindest einer einem Einbauort (10) zugeordneten zweiten Kennung (OPID).

2. Verfahren nach Anspruch 1, umfassend:
Bestimmen (S11) zumindest einer dem Automatisierungsgerät (D1, D2) zugeordneten ersten Kennung (DEVID) und/oder Bestimmen (S12) zumindest einer dem Einbauort (10) zugeordneten zweiten Kennung (OPID).

3. Verfahren nach Anspruch 1 oder 2, umfassend:
Bestimmen (S2) einer Aufzeichnung (SNAP) der ersten Kennung (DEVID) und/oder der zweiten Kennung (OPID), insbesondere am Einbauort (10) im Automatisierungssystem (100).

4. Verfahren nach Anspruch 3, umfassend:
Ausgeben (S3) einer Zertifikatsanfrage (CSR), wobei die Zertifikatsanfrage (CSR) zumindest auf einem Teil der Aufzeichnung (SNAP) basiert.

5. Verfahren nach Anspruch 3 oder 4, wobei zum Bereitstellen (S4) des operativen Zertifikats (OCERT) die Aufzeichnung (SNAP) von einer lokalen Registrierungsstelle (LRA) ausgewertet wird.

6. Verfahren nach einem der vorhergehenden Ansprüche, wobei die Aufzeichnung (SNAP) durch ein Inbetriebnahmegerät (PG) aufgenommen und/oder initiiert wird.

7. Verfahren nach einem der vorhergehenden Ansprüche, wobei zumindest Teile der ersten Kennung (DEVID) ein Herstellerzertifikats (MCERT) des Automatisierungsgeräts (D1, D2) oder Bestandteile des Herstellerzertifikats (MCERT) sind.

8. Verfahren nach einem der vorhergehenden Ansprüche, wobei die Aufzeichnung (SNAP) mit einem Zertifikat eines Inbetriebnahmegeräts (PG) oder einem Herstellerzertifikat (MCERT) des Automatisierungsgeräts (D1) authentifiziert und/oder integritätsgeschützt wird.

9. Verfahren nach einem der vorhergehenden Ansprüche, wobei die Aufzeichnung (SNAP) zusätzlich zur ersten Kennung (DEVID) und/oder der zweiten Kennung (OPID) eine Information über Zeit und/oder Ort der Aufnahme, insbesondere eine gesicherte Information, umfasst.

10. Verfahren nach einem der vorhergehenden Ansprüche, wobei zum Bestimmen (S2) der zweiten Kennung (OPID) Sicherheitsinformationen von bereits installierten Automatisierungsgeräten (D1, D2) ausgewertet werden.

11. Verfahren nach einem der vorhergehenden Ansprüche, wobei anhand des operativen Zertifikats (OCERT) eine Konfiguration aus einem Engineering System auf das Automatisierungsgerät (D1, D2) geladen wird.

12. Inbetriebnahmegerät (PG) ausgebildet zum Initiieren und/oder Bestimmen einer Aufzeichnung (SNAP) von einer einem Automatisierungsgerät (D1, D2) zugeordneten ersten Kennung (DEVID) und zumindest einer einem Einbauort (10) zugeordneten zweiten Kennung (OPID) und zum Anfordern und/oder Bereitstellen der Aufzeichnung (SNAP) zum Bereitstellen (S4) eines operativen Zertifikats (OCERT) für das Automatisierungsgerät (D1, D2) basierend auf zumindest der ersten Kennung (DEVID) und der zweiten Kennung (OPID).

13. Registrierungsstelle (LRA) aufweisend zumindest eine Einrichtung, die zum Auswerten einer Aufzeichnung (SNAP) einer ersten Kennung (DEVID) und/oder einer zweiten Kennung (OPID) ausgebildet ist.

14. Automatisierungsgerät (D1, D2) ausgebildet zur Verwendung in einem Verfahren nach einem der Ansprüche 1 bis 11.

15. Automatisierungsgerät (D1, D2) aufweisend eine erste Kennung (DEVID), ferner ausgebildet zur Authentifizierung und/oder Kommunikation mittels eines operativen Zertifikats (OCERT), das basierend auf zumindest der ersten Kennung (DEVID) und zumindest einer einem Einbauort (10) des Automatisierungsgeräts (D1, D2) zugeordneten zweiten Kennung (OPID) bereitgestellt wurde.

16. Automatisierungsgerät (D1, D2) nach Anspruch 14 oder 15, aufweisend eine Anzeigevorrichtung (DISP) und/oder eine Ausgabevorrichtung, die zur Anzeige und/oder Ausgabe der ersten Kennung (DEVID) und/oder eines Herstellerzertifikats (MCERT) ausgebildet ist.
